Europäisches Patentamt

European Patent Office

Office européen des brevets

(19)

(11) Numéro de publication : **0 115 982**
**B1**

(12)

# FASCICULE DE BREVET EUROPÉEN

(45) Date de publication du fascicule du brevet :
04.03.87

(51) Int. Cl.⁴ : **D 06 F 75/26**, G 01 P 13/00

(21) Numéro de dépôt : 84400124.8

(22) Date de dépôt : 20.01.84

(54) Dispositif électronique de sécurité pour fer à repasser électrique.

(30) Priorité : 02.02.83 FR 8301601

(43) Date de publication de la demande :
15.08.84 Bulletin 84/33

(45) Mention de la délivrance du brevet :
04.03.87 Bulletin 87/10

(84) Etats contractants désignés :
BE CH DE FR GB IT LI NL SE

(56) Documents cités :
WO-A-82 /035 20
DE-A- 2 902 817
FR-A- 2 355 113
FR-A- 2 408 680
US-A- 2 382 587
US-A- 2 470 532

(73) Titulaire : SEB S.A.

F-21260 Selongey (FR)

(72) Inventeur : Schwob, Pierre
55 Avenue des Freres Lumière
F-69008 Lyon (FR)
Inventeur : Mieg, Christian
Rue Sainte Beuve
F-69330 Meyzieu (FR)

(74) Mandataire : Bouju, André
Cabinet Bouju 38 avenue de la Grande Armée
F-75017 Paris (FR)

## Description

La présente invention concerne un dispositif électronique de sécurité pour fer électrique à repasser permettant de couper automatiquement l'alimentation électrique du fer au bout d'un temps prédéterminé de non-utilisation, ce dispositif comportant un corps mobile sensible à l'utilisation du fer et associé à un commutateur dont l'état est fonction de la position du corps mobile et qui fait partie d'un circuit de remise à zéro d'un temporisateur pouvant déclencher la coupure de l'alimentation de la résistance chauffante du fer au bout d'un temps prédéterminé.

Un tel dispositif est connu d'après le WO-A-82/03520. Selon ce document, le corps mobile est constitué par une partie mobile de la poignée du fer. Cette partie mobile actionne un commutateur lorsque la poignée est saisie par l'utilisateur. Il faut donc que l'utilisateur saisisse la poignée d'une façon particulière pour que l'alimentation du fer se maintienne. Ceci est une contrainte.

Selon un autre mode de réalisation décrit dans le même document, le dispositif électronique de sécurité est situé hors du fer et il est sensible aux mouvements du fil d'alimentation du fer lors du repassage. Ceux-ci sont captés par une antenne support dont la base agit sur un détecteur du type piézo-électrique, jauge de contrainte, accéléromètre, cellule photo-électrique ou capteur magnétique.

Dans ce mode de réalisation, il n'est pas à proprement parler décrit de commutateur. Il s'agit plutôt de dispositifs qui fournissent en sortie un signal qui croît en fonction de la flexion de l'antenne support. Le dépassement d'un certain seuil par ce signal est détecté et se traduit par une remise à zéro du temporisateur.

Cette disposition a aussi des inconvénients. On considère qu'il y a utilisation lorsque l'antenne est fléchie. Or cela n'est pas certain, le fer pouvant très bien être à l'arrêt dans une position où le fil est tendu et tire sur l'antenne. C'est le cas par exemple si le fer est tombé de sa semelle-support ou même de la table de repassage en l'absence de l'utilisateur. C'est le cas aussi si le fer est arrêté loin de l'antenne.

D'autre part, le fait que l'antenne soit au repos ne signifie pas nécessairement que le fer est inutilisé. Il est possible que le fer soit utilisé sans tirer sur le cordon, au moins pendant certaines phases du travail de repassage.

Le FR-A-2 355 113 décrit un dispositif électronique de sécurité pour fer à repasser électrique dans lequel le corps mobile est une bille disposée dans un tube courbe dont la convexité est tournée vers le haut du fer afin que la bille s'immobilise au point le plus bas de ce tube lorsque le fer n'est pas déplacé. Cette position d'immobilisation de la bille est détectée par un dispositif d'exploration temporisé qui commande la coupure de l'alimentation après un temps prédéterminé de courte durée. Ce dispositif présente l'inconvénient d'obliger à placer le fer en position inclinée ou sur chant lorsqu'on veut chauffer la semelle à partir de l'état froid.

De plus la bille ne prend sa position préférentielle que si le fer se trouve lui-même dans une position bien déterminée. Or, si l'on prend en compte le cas où le fer tombe, on ne peut prévoir la position de repos. La chute d'un fer à repasser est peut-être relativement rare, mais ses conséquences peuvent porter atteinte à la sécurité ou entraîner des dégâts importants.

Ainsi, dans tous les dispositifs antérieurs, on a considéré nécessaire de définir pour le corps mobile une position de repos qu'il est censé prendre lorsque le fer n'est pas utilisé, et une position « excitée » qu'il est censé prendre lorsque le fer est utilisé.

Compte tenu des moyens de rappel qui sont nécessaires à cet effet, l'utilisation du fer ne sera détectée que si les moyens de rappel sont vaincus. Dans tous les cas, l'art antérieur oblige à faire un compromis entre la sensibilité du détecteur et la fiabilité de son retour en position de repos en l'absence d'utilisation.

De plus, même si l'on ne tient pas compte des problèmes de compromis sur la sensibilité, tous les systèmes antérieurs perturbent l'utilisation (poignée à partie mobile) et/ou risquent de se tromper lorsqu'ils détectent une utilisation ou une inutilisation.

Le but de l'invention est de remédier à ces inconvénients, et en particulier de proposer un dispositif qui détecte de façon plus sûre, et sans gêne pour l'utilisateur, aussi bien l'inutilisation du fer que son utilisation.

Suivant l'invention, le dispositif du genre cité au début est caractérisé en ce que le corps est mobile dans un logement du fer sous l'effet des mouvements du fer lors du repassage, et en ce que le circuit de remise à zéro est agencé pour fournir passagèrement au temporisateur un signal commandant la remise à zéro du temporisateur lors de certains au moins des changements d'états du commutateur, et pour ne pas fournir de signal commandant la remise à zéro lorsque le commutateur conserve durablement un même état, quel que soit ledit même état.

Le circuit de remise à zéro du temporisateur est agencé de façon qu'il y ait absence de remise à zéro quel que soit l'état stable du corps mobile. Ce sont seulement les changements d'état du commutateur qui provoquent l'émission passagère d'un signal de remise à zéro.

Comme le corps est mobile dans son logement sous l'effet des mouvements du fer, de tels changements d'état ont lieu continuellement lorsque le fer est utilisé. Par contre, ces changements d'état cessent de se produire lorsque le fer est au repos, et ce dans n'importe quelle position.

Ainsi, il n'est plus nécessaire que le corps mobile soit rappelé vers une position de repos. Il peut se trouver dans n'importe quelle position et le temporisateur coupera toujours l'alimentation après écoulement d'un certain délai.

Les moyens de rappel n'étant plus nécessaires, la sensibilité du dispositif peut être aussi grande que l'on veut. Il n'y a donc plus aucun risque qu'une utilisation ne soit pas détectée.

D'autres particularités et avantages de l'invention apparaîtront encore dans la description ci-après.

Aux dessins annexés, donnés à titre d'exemples non limitatifs :

la figure 1 est une vue partielle en coupe longitudinale d'un fer à repasser selon l'invention ;

la figure 2 est une vue en coupe selon le plan II-II de la figure 1 ;

la figure 3 est une vue schématique de l'interrupteur à lames souples coopérant avec l'aimant mobile dans son logement et illustrant le fonctionnement du dispositif ;

la figure 4 représente un schéma analogue à la figure 3, montrant la position des contacts de l'interrupteur à lames souples ouverts (O) ou fermés (F) en fonction des positions de l'aimant dans son logement ;

la figure 5 représente le schéma électrique d'un pont de résistances piloté par les contacts de l'interrupteur à lames pour la remise à zéro du temporisateur ;

la figure 6 représente le signal de tension Vo appliqué au compteur lors d'une séquence ouverture-fermeture des contacts de l'interrupteur à lames ;

la figure 7 donne le schéma électrique général du dispositif selon l'invention ;

la figure 8 est un schéma perspectif de l'ensemble aimant-lames de contact.

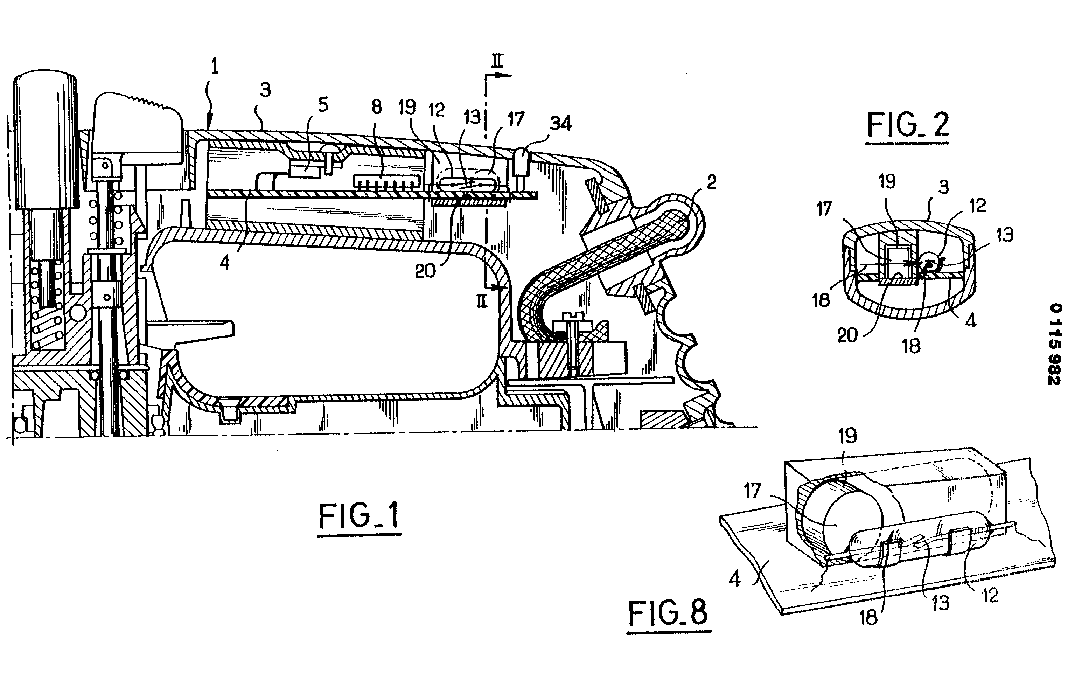

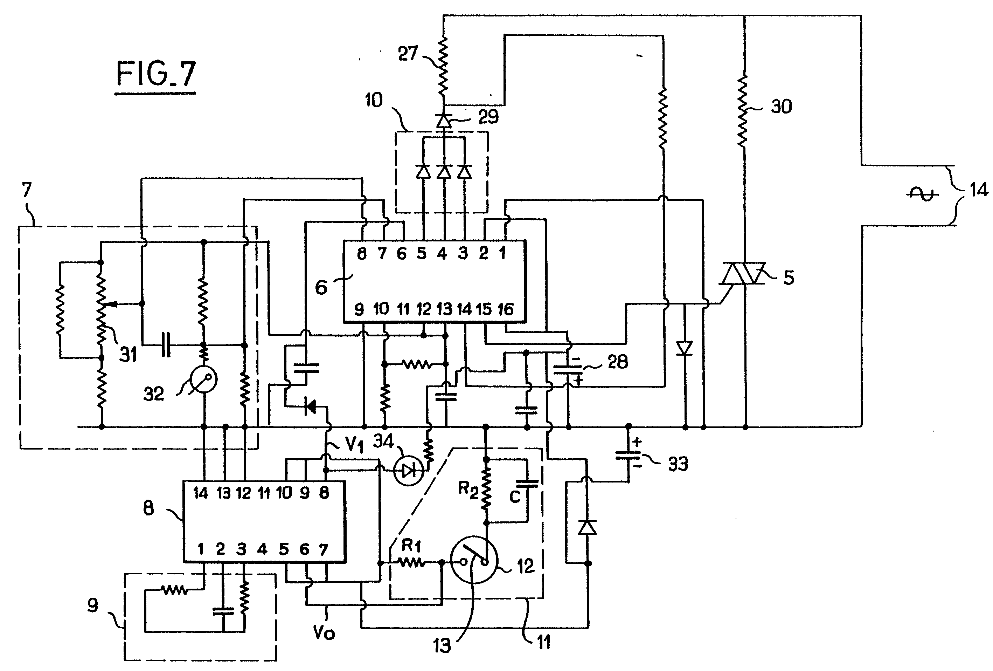

Dans la réalisation des figures 1 et 2 le fer à repasser 1 comporte un câble d'alimentation électrique 2 et une poignée 3. Celle-ci réalisée par exemple en matière plastique moulée en deux parties qui s'emboîtent est creuse et renferme le dispositif selon l'invention de coupure automatique de l'alimentation électrique du fer au bout d'un temps prédéterminé. Ce dispositif comprend plusieurs circuits électroniques représentés schématiquement à la figure 7 et qui sont montés sur un circuit imprimé support 4.

Ces circuits électroniques comprennent principalement un triac 5 commandé par un comparateur 6, un pont de mesure de la température de la semelle du fer 7, un compteur d'impulsions 8 piloté par un oscillateur 9, un dispositif d'affichage 10 des zones de température et de l'état du fer par exemple par diodes électroluminescentes et un circuit de commande de la remise à zéro du compteur 11 comprenant un commutateur 12. L'ensemble des circuits est alimenté par une source de tension alternative 14.

Le commutateur 12 est constitué par un interrupteur à lames souples de type connu, appelé communément ILS, dont les contacts 13 ouverts au repos sont scellés dans une ampoule de verre 16 sous vide ou remplie d'un gaz inerte qui les protège mécaniquement et chimiquement. Ces contacts 13 sont en matériau magnétique. Ils définissent une zone de collage matérialisée par le trait mixte 15. Ces contacts sont influencés par un aimant dont l'axe d'aimantation 18 est perpendiculaire aux lames de contact de l'interrupteur 12.

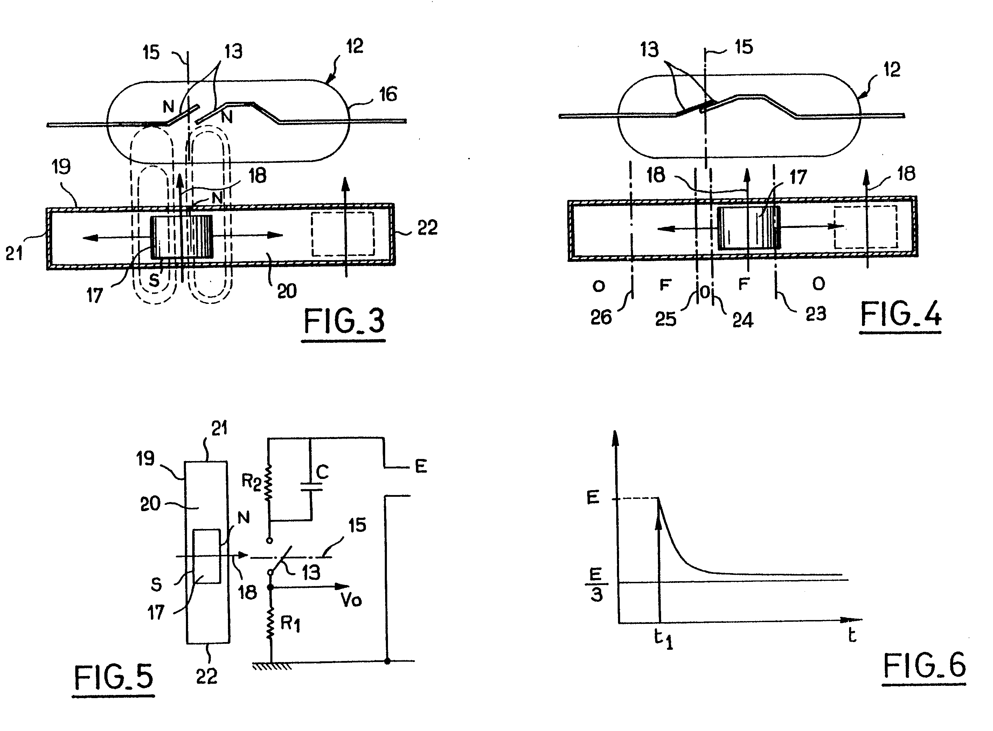

Cet aimant 17 est cylindrique et peut rouler par inertie, lorsque le fer est déplacé, dans un logement 19 sur une surface 20 sensiblement rectiligne et horizontale. Le logement 19 présente une section légèrement plus grande que celle axiale de l'aimant 17 afin que celui-ci puisse se déplacer librement entre les parois extrêmes 21 et 22 du logement (voir figures 3 et 4) et son épaisseur est de préférence plus faible que son diamètre afin de faciliter son déplacement. Le logement 19 est sensiblement parallèle à l'axe longitudinal du fer à repasser et il est placé parallèlement à l'ampoule 12. Il présente une longueur telle que lors du déplacement de l'aimant 17, l'axe d'aimantation 18 balaie une zone située de part et d'autre de la zone de collage 15 des contacts 13. Ce logement est fixé de manière appropriée à la paroi supérieure de la poignée 3 du fer à repasser ainsi qu'au circuit imprimé 4 (voir figures 1 et 2).

A la figure 3 on a représenté les deux faces polaires Nord (N) et Sud (S) de l'aimant 17 ainsi qu'en pointillés les lignes de force du champ magnétique qu'il crée. On voit sur cette figure que l'axe d'aimantation 18 étant très voisin de la zone de collage 15 des contacts, il y a formation sur chacun des contacts 13 d'un pôle Nord et par conséquent répulsion entre ces contacts donc ouverture du circuit de l'interrupteur 12.

La figure 4 montre schématiquement la position des contacts 13 ouverts (O) ou fermés (F) en fonction des différentes positions possibles de l'aimant 17 dans son logement. Lorsque l'aimant 17 se trouve à l'extrême droite de son logement 20, il n'est pas assez puissant pour influencer les contacts 13 et ceux-ci sont donc naturellement ouverts. Lorsque l'aimant 17 se déplace vers la gauche, à partir d'une certaine position de l'axe d'aimantation 18, matérialisée par le trait mixte 23, le champ magnétique se ferme par les deux lames souples et forme sur les contacts 13 respectivement un pôle Sud et un pôle Nord. Il y a alors attraction et fermeture des contacts lorsque la force de rappel exercée par les lames souples est vaincue. Lorsque l'aimant vient très près de la zone de collage 15 des contacts 13 c'est-à-dire à partir du trait mixte 24 comme indiqué précédemment en référence à la figure 3 les contacts 13 s'ouvrent et restent ouverts jusqu'à ce que l'axe d'aimantation 18 dépasse la position représentée en trait mixte 25 sur la figure 4, seuil à partir duquel il se crée à nouveau des pôles opposés sur les contacts 13 donc attraction et fermeture. De même, lorsque l'aimant 17 continue de se déplacer vers la gauche dans le logement 20, son influence se réduit et les contacts 13 s'ouvrent après que l'axe d'aimantation 18 ait dépassé la position en trait mixte 26.

Le même cycle de commutation des contacts 13 se produit dans un déplacement en sens inverse de celui décrit ci-dessus. Ainsi, lorsque l'aimant 17 se déplace dans un sens ou dans l'autre dans le logement 20 suivant la direction de déplacement du fer, il provoque au moins une séquence ouverture-fermeture des contacts 13 des lames souples.

On va montrer à présent en référence aux figures 5 et 6 qu'une telle séquence entraîne la remise à zéro du temporisateur constitué par le compteur d'impulsions 8 et le circuit de commande de la remise à zéro 11 de ce compteur représenté sur les figures 5 et 7.

Le circuit de remise à zéro 11 comprend un pont de résistance $R_1$, $R_2$ alimenté par une source de tension E de courant continu redressé à partir de l'alimentation en courant alternatif du secteur 14 (voir figure 5). Cette tension est fournie par l'intermédiaire d'une résistance dite « chutrice » 27, d'une diode redresseuse 29 et d'un condensateur chimique de lissage 28.

Ce pont de résistances comprend en série une résistance $R_1$, les contacts 13 de l'interrupteur à lames souples 12, et une résistance $R_2$ aux bornes de laquelle est branché un condensateur C. Un signal de tension Vo est prélevé aux bornes de la résistance $R_1$ et envoyé à la borne n° 6 du compteur d'impulsions 8.

La remise à zéro du compteur 8 intervient lorsqu'un signal de tension d'une valeur un peu supérieure à E/2 est envoyé sur la borne n° 6.

Lorsque le fer est au repos, les contacts 13 peuvent être indifféremment ouverts ou fermés suivant la position de l'aimant 17 dans son logement. Si les contacts sont fermés, la tension aux bornes de $R_1$ prend une valeur $V_o = E·R_1/(R_1 + R_2)$.

En choisissant par exemple pour $R_2$ une valeur sensiblement double de $R_1$ on voit que la tension Vo est égale à environ E/3 donc le compteur n'est pas remis à zéro.

Si les contacts 13 sont ouverts, la tension aux bornes de $R_1$ est nulle et le compteur continue de même son cycle de comptage.

Par contre, lors du passage au temps $t_1$ (voir figure 6) de l'ouverture à la fermeture des contacts 13 provoqué par le déplacement de l'aimant 17 devant l'interrupteur à lames souples 12, une montée brusque de la tension de O à + E aux bornes de $R_1$ se produit, cette montée étant suivie dans l'exemple choisi par une chute progressive de cette tension jusqu'à une valeur asymptotique E/3 comme établi précédemment lorsque le condensateur C est complètement chargé.

Ces impulsions de tension E sont appliquées à l'entrée n° 6 du compteur 8 et elles remettent à zéro ce compteur piloté par l'oscillateur 9.

Si aucune impulsion de tension E n'est appliquée à la borne n° 6, au bout d'un temps prédéterminé de l'ordre de cinq minutes, le compteur 8 envoie un signal de tension $V_1$ par sa sortie n° 8 sur la borne n° 6 du comparateur 6.

Ce comparateur 6 est par ailleurs sensible au déséquilibre du pont de mesure de la température 7 raccordé à ses entrées 7 et 8. Ce pont comprend principalement un potentiomètre 31 de réglage de la température de la semelle de fer et une thermistance 32 de mesure de cette température. Tant que la température choisie n'est pas atteinte, le comparateur 6 envoie par sa sortie n° 15 des impulsions d'allumage sur la gâchette du triac 5. Lorsque cette température est atteinte le pont de mesure 7 commande l'arrêt de ces impulsions et la résistance de chauffage 30 cesse d'être alimentée. De même lorsqu'un signal de tension $V_1$ est appliqué à la borne n° 6 du comparateur 6, ce signal commande l'arrêt des impulsions d'allumage du triac 5 et par suite l'arrêt de l'alimentation de la résistance de chauffage 30. Simultanément le comparateur 6 commande l'allumage d'une diode électroluminescente 34 afin de signaler cet état du fer à repasser.

Il suffira ensuite d'un seul déplacement de l'aimant 17 dans son logement 21 pour commander une séquence ouverture-fermeture des contacts 13 qui entraînera la remise à zéro du compteur 8 et l'envoi d'impulsions d'allumage sur le triac 5 par le comparateur 6 ainsi que l'extruction de la diode 34 correspondante. Le dispositif comporte encore un condensateur chimique 33 de sauvegarde de l'alimentation du compteur 8 en cas de coupure brève du secteur. Ce condensateur permet au compteur 8 de conserver la mémoire de son état jusqu'au retour de la tension du secteur 14 (pendant cinq secondes par exemple).

Les effets et avantages de ce dispositif sont les suivants :

A la mise sous tension du fer, l'utilisateur n'a pas à placer le fer dans une position particulière à cause du dispositif de sécurité, pour autoriser le chauffage du fer à la température choisie.

Par ailleurs, le circuit électrique retenu pour le circuit de commande de la remise à zéro du compteur est indifférent à la position de l'aimant. Il n'est sensible qu'au déplacement de celui-ci ce qui fait que le dispositif de sécurité selon l'invention fonctionne quelle que soit la position dans laquelle le fer est abandonné.

Dans ce cas, l'alimentation est coupée au bout d'un temps de l'ordre de cinq minutes. On évite ainsi de consommer inutilement de l'électricité. Cette certitude que l'alimentation électrique du fer sera coupée au bout d'un temps relativement court, apporte à l'utilisateur une grande tranquillité d'esprit en cas d'oubli du fer branché s'il a été appelé à d'autres occupations imprévues par exemple. L'utilisateur n'a pas à s'inquiéter de venir débrancher le fer puisque la coupure de son alimentation électrique est réalisée automatiquement.

Enfin l'interrupteur à lames souples retenu pour la construction du dispositif selon l'invention est de par sa construction un dispositif fiable et robuste qui peut supporter des millions de manœuvres, ce qui lui donne une durée de vie aussi longue sinon plus longue que les autres composants électriques ou électroniques du fer à repasser.

Bien entendu la présente invention n'est pas limitée aux modes de réalisation décrits ci-dessus et on peut y apporter de nombreuses variantes d'exécution.

Ainsi, l'interrupteur à lames souples 12 et son aimant 17 de commande pourraient être remplacés par une bille ou un cylindre roulant dans un logement approprié dont le déplacement écraserait, par exemple, un doigt souple traversant la surface de roulement de cette bille ou de ce cylindre pour provoquer l'ouverture puis la fermeture d'un contact à fermeture associé.

Cet ensemble pourrait être remplacé par un interrupteur sans contact du type photodiode associée à une diode électroluminescente placée de part et d'autre du logement du corps mobile, le faisceau lumineux de la diode électroluminescente étant coupé par le passage de la bille ou du cylindre opaque se déplaçant dans son logement.

Cet ensemble pourrait encore être remplacé par une goutte de mercure glissant dans le fond d'un tube en verre, horizontal à la partie inférieure duquel deux courtes électrodes métalliques seraient scellées afin d'être mises en contact électrique par le mercure lors de son passage dans le déplacement du fer.

De même le compteur du temporisateur pourrait être remplacé par un circuit RC dans lequel une capacité C chargée se décharge à travers une résistance R, la résistance et la capacité étant calculées pour obtenir le temps prédéterminé pour la commande du comparateur ou d'un relais convenablement adapté et la coupure de la résistance du fer.

La surface de déplacement rectiligne de l'aimant 17 ou du corps mobile pourrait présenter une légère inclinaison pour donner une position préférentielle de repos à ce corps mobile sans que cela entraîne d'inconvénients pour le fonctionnement du dispositif, la seule condition étant que cette pente soit suffisamment faible pour que dans un déplacement normal du fer à repasser, le corps mobile soit mis en mouvement et qu'il provoque au moins une séquence ouverture-fermeture de l'interrupteur commandé.

## Revendications

1. Dispositif électronique de sécurité pour fer électrique à repasser permettant de couper automatiquement l'alimentation électrique du fer au bout d'un temps prédéterminé de non-utilisation, ce dispositif comportant un corps mobile (17) sensible à l'utilisation du fer et associé à un commutateur (12) dont l'état est fonction de la position du corps mobile (17) et qui fait partie d'un circuit (R1, R2, C) de remise à zéro d'un temporisateur (8) pouvant déclencher la coupure de l'alimentation de la résistance chauffante (30) du fer au bout d'un temps prédéterminé, caractérisé en ce que le corps (17) est mobile dans un logement (19) du fer sous l'effet des mouvements du fer lors du repassage, et en ce que le circuit de remise à zéro est agencé pour fournir passagèrement au temporisateur (8) un signal commandant la remise à zéro du temporisateur lors de certains au moins des changements d'état du commutateur (12), et pour ne pas fournir de signal commandant la remise à zéro lorsque le commutateur (12) conserve durablement un même état, quel que soit ledit même état.

2. Dispositif selon la revendication 1, caractérisé en ce que le circuit de remise à zéro comprend une résistance (R1) et un circuit RC (R2, C) branchés de part et d'autre du commutateur (12), en série avec lui entre deux bornes d'une source de tension redressée (E), le signal de remise à zéro étant prélevé entre le commutateur (12) et la résistance (R1).

3. Dispositif selon la revendication 2, caractérisé en ce que la résistance (R2) du circuit RC a une valeur sensiblement plus grande que l'autre résistance (R1) du circuit de remise à zéro, ladite autre résistance (R1) étant branchée entre la masse de la source (E) et le commutateur (12) et en ce que le signal de remise à zéro (Vo) est appliqué sur une entrée de remise à zéro du temporisateur (8) sensible à un signal de tension supérieur à $E/2$, ledit signal (Vo) étant toujours inférieur à $E/2$ lorsque le commutateur (12) est durablement ouvert ou fermé et ne prenant une valeur supérieure à $E/2$ que lorsque le commutateur (12) passe de l'ouverture à la fermeture.

4. Dispositif selon l'une des revendications 2 ou 3, caractérisé en ce que le temporisateur est constitué par un compteur (8) connecté d'une part aux bornes de ladite autre résistance (R1) et d'autre part à une entrée d'un comparateur (6) pilotant les impulsions d'allumage de la gâchette d'un triac (5) de commande de l'alimentation de la résistance chauffante (30), ledit compteur étant remis à zéro chaque fois qu'un signal de tension (Vo) qu'il reçoit a franchi un certain seuil dans au moins un sens, et émettant sur l'entrée du comparateur (6) lorsqu'il atteint un seuil de comptage prédéterminé un signal de tension (V1) qui commande l'arrêt de l'envoi des impulsions d'allumage sur la gâchette du triac (5) et la coupure de l'alimentation de la résistance de chauffage (30).

5. Dispositif selon l'une des revendications 1 à 4, caractérisé en ce que le corps mobile est un aimant permanent (17), et le commutateur est un interrupteur à lame souple (12) monté dans une ampoule au voisinage de l'aimant permanent.

6. Dispositif selon l'une des revendications 1 à 4, caractérisé en ce que le corps mobile est constitué par une goutte de mercure disposée dans un tube couché, et en ce que le commutateur comprend deux électrodes scellées dans le tube afin d'être mises en contact électrique mutuel par le mercure dans certaines phases de son déplacement dans le tube sous l'effet des mouvements du fer.

7. Dispositif selon l'une des revendications 1 à 6, caractérisé en ce que le corps (17) est mobile selon un trajet qui est sensiblement horizontal lorsque le fer est en position de service sur un plan horizontal.

## Claims

1. An electronic safety device for an electric flat-iron, the device providing automatic interruption of the supply of electricity to the iron after a predetermined period of non-use, the device comprising a moving member (17) which is sensitive to use of the iron and which is associated with a switch (12) whose state depends upon the position of the moving member (17) and which is part of a zero-resetting circuit (R1, R2, C) of a timer (8) adapted to trip energization of the heating element (30) of the iron after a predetermined time, characterised in that the moving member (17) is adapted to move in a recess (19) in the iron in response to movements thereof during ironing and the zero-resetting circuit is adapted to supply the timer (8) briefly with a signal for zero-resetting the timer in the event of at least some of the changes of state of the switch (12) and not to supply the zero-resetting signal when the switch (12) remains durably in the same state, whatever such same state may be.

2. A device according to claim 1, characterised in that the zero-resetting circuit comprises a resistance (R1) and an RC-circuit (R2, C) connected on either side of the switch (12) in series therewith between two terminals of a rectified power supply (E), the zero-resetting signal being tapped off between the switch (12) and the resistance (R1).

3. A device according to claim 2, characterised in that the resistance (R2) of the RC circuit is appreciably larger than the other resistance (R1) of the zero-resetting circuit, the latter resistance being connected between the earthed side of the rectified power supply (E) and the switch (12), and the zero-resetting signal (Vo) is applied to a zero-resetting input of the timer (8), such input responding to a signal of a voltage greater than E/2, the signal (Vo) always being less than E/2 when the switch (12) is durably in an open or closed state and becoming greater than E/2 only when the switch (12) changes from the open state to the closed state.

4. A device according to claim 2 and/or 3, characterised in that the timer takes the form of a counter (8) connected across the zero-resetting resistance (R1) and to one input of a comparator (6) piloting the firing pulses of the trigger of a triac (5) controlling energization of the heating element (30), the counter being zero reset whenever a signal of voltage (Vo) which it receives has exceeded a particular threshold in at least one direction, the counter transmitting to the input of the comparator (6) upon reaching a predetermined count threshold a voltage signal (V1) which initiates the cessation of the transmission of firing pulses to the triac trigger and interruption of energization of the heating element (30).

5. A device according to any of claims 1-4, characterised in that the moving member is a permanent magnet (17) and the switch is a reed switch (12) disposed in a bulb near the permanent magnet.

6. A device according to any of claims 1-4, characterised in that the moving member is a drop of mercury in a horizontal tube and the switch comprises two electrodes so sealed in the tube as to make electrical contact with one another by way of the mercury in some phases of the movement thereof in the tube due to movements of the iron.

7. A device according to any of claims 1-6, characterised in that the member (17) is movable along a path which is substantially horizontal when the iron is in its operating position in a horizontal plane.

**Patentansprüche**

1. Elektronische Sicherheitsvorrichtung für ein elektrisches Bügeleisen und zur automatischen Unterbrechung der Stromversorgung des Bügeleisens nach Ablauf einer vorbestimmten Nichtbenutzungsdauer, wobei diese Vorrichtung einen beweglichen Körper (17) aufweist, der auf die Benutzung des Bügeleisens anspricht und einem Schalter (12) zugeordnet ist, dessen Zustand von der Stellung des beweglichen Körpers (17) abhängt und der Bestandteil einer Nullrücksetzschaltung (R1, R2, C) einer Zeitsteuerung (8) ist, welche die Unterbrechung der Stromversorgung des Heizwiderstandes (30) des Bügeleisens nach Ablauf einer vorbestimmten Zeitspanne auslösen kann, dadurch gekennzeichnet, daß der Körper (17) in einer Aufnahme (19) des Bügeleisens unter der Wirkung der Bewegungen des Bügeleisens während des Bügelns beweglich ist und daß die Nullrücksetzschaltung derart ausgelegt ist, daß sie der Zeitsteuerung (8), wenn zumindest einige der Zustandsänderungen des Schalters stattfinden, vorübergehend ein Signal liefert, welches die Nullrücksetzung der Zeitsteuerung (12) steuert, und daß sie kein die Nullrücksetzung steuerndes Signal liefert, wenn der Schalter (12) andauernd denselben Zustand beibehält, unabhängig davon, um welchen gleichen Zustand es sich handelt.

2. Vorrichtung nach Anspruch 1, dadurch gekennzeichnet, daß die Nullrücksetzschaltung einen Widerstand (R1) und eine RC-Schaltung (R2, C) umfaßt, die beiderseits des Schalters (12) in Reihe mit diesem zwischen zwei Anschlüssen einer gleichgerichteten Spannungsquelle (E) angeschlossen sind, wobei das Nullrücksetzsignal zwischen dem Schalter (12) und dem Widerstand (R1) abgenommen wird.

3. Vorrichtung nach Anspruch 2, dadurch gekennzeichnet, daß der Widerstand (R2) der RC-Schaltung einen Wert aufweist, der deutlich größer als der des anderen Widerstandes (R1) der Nullrücksetzschaltung ist, wobei der genannte andere Widerstand (R1) zwischen die Masse der Quelle (E) und den Schalter (12) geschaltet ist, und daß das Nullrücksetzsignal (Vo) an einen Nullrücksetzeingang der Zeitsteuerung (8) angelegt wird, welcher auf ein Signal mit einer Spannung von mehr als E/2 anspricht, wobei das genannte Signal (Vo) stets kleiner als E/2 ist, wenn der Schalter (12) dauernd offen oder geschlossen ist, und einen größeren Wert als E/2 nur dann annimmt, wenn der Schalter (12) vom Öffnungszustand in den Schließzustand übergeht.

4. Vorrichtung nach einem der Ansprüche 2 und 3, dadurch gekennzeichnet, daß die Zeitsteuerung aus einem Zähler (8) gebildet ist, welcher einerseits an die Anschlüsse des genannten anderen Widerstandes (R1) und andererseits an einen Eingang eines Komparators (6) angeschlossen ist, welcher die Zündimpulse der Auslöseelektrode eines Triacs (5) zur Steuerung der Stromversorgung des Heizwiderstandes (30) steuert, wobei dieser Zähler jedesmal dann auf Null zurückgesetzt wird, wenn ein durch ihn empfangenes Spannungssignal (Vo) einen bestimmten Schwellwert in wenigstens einem Sinne überschritten hat und an den Eingang des Komparators (6), wenn er einen vorbestimmten Zählschwellwert erreicht, ein Spannungssignal (V1) liefert, welches das Anhalten des Aussendens von Zündimpulsen an die Auslöseelektrode des Triacs (5) und die Unterbrechung der Stromversorgung des Heizwiderstandes (30) steuert.

5. Vorrichtung nach einem der Ansprüche 1 bis 4, dadurch gekennzeichnet, daß der bewegliche Körper ein Permanentmagnet (17) ist und der Schalter ein Unterbrecher mit biegbarer Lamelle (12) ist, welcher in der Nähe des Permanentmagneten in einem Kolben angeordnet ist.

6. Vorrichtung nach einem der Ansprüche 1 bis 4, dadurch gekennzeichnet, daß der bewegliche Körper durch einen Quecksilbertropfen gebildet ist, welcher in einem liegenden Rohr angeordnet ist, und daß der Schalter zwei Elektroden umfaßt, die in das Rohr eingesiegelt sind, um durch das Quecksilber während bestimmten Phasen seiner Bewegung in dem Rohr unter der Wirkung der Bewegungen des Bügeleisens in elektrischen Kontakt miteinander gebracht zu werden.

7. Vorrichtung nach einem der Ansprüche 1 bis 6, dadurch gekennzeichnet, daß der Körper (17) auf einer Bahn bewegbar ist, die im wesentlichen waagerecht ist, wenn das Bügeleisen sich in seiner Arbeitsstellung auf einer waagerechten Ebene befindet.

FIG_1

FIG_2

FIG_8

0 115 982

FIG.3

FIG.4

FIG.5

FIG.6

**FIG. 7**

0 115 982